# EUROPÄISCHE PATENTSCHRIFT

(11) **EP 2 162 971 B1**
(45) Veröffentlichungstag und Bekanntmachung des Hinweises auf die Patenterteilung: **31.10.2012**
(21) Anmeldenummer: 08750024.5
(22) Anmeldetag: 05.05.2008
(51) Int. Cl.: H02K 3/47

(54) **STATOR MIT ISOLIERUNG FÜR EINEN ELEKTROMOTOR UND ISOLIERUNG FÜR EINEN STATOR SOWIE ELEKTROWERKZEUGMASCHINE**
STATOR WITH INSULATION FOR AN ELECTRIC MOTOR AND INSULATION FOR A STATOR AS WELL AS ELECTRIC MACHINE TOOL
STATOR MUNI D'UNE ISOLATION POUR MOTEUR ÉLECTRIQUE ET ISOLATION POUR STATOR, ET MACHINE-OUTIL ÉLECTRIQUE

(30) Priorität: 27.06.2007 DE 102007029739
(43) Veröffentlichungstag der Anmeldung: 17.03.2010
(73) Patentinhaber: Robert Bosch GmbH, 70442 Stuttgart (DE)
(72) Erfinder: RIEKER, Werner, 71111 Waldenbuch (DE); OBERLI, Gerhard, CH-4704 Niederbipp (CH)
(86) Internationale Anmeldenummer: PCT/EP2008/055461
(87) Internationale Veröffentlichungsnummer: WO 2009/000585

(56) Entgegenhaltungen:
- EP-A- 0 313 514
- WO-A-03/079520
- JP-A- 50 080 407
- JP-A- 2002 136 068
- US-A- 3 911 299
- US-A1- 2003 038 555

## Beschreibung

### Stand der Technik

Die Erfindung geht aus von einem Stator mit Isolierung, einer Isolierung für einen Stator und einer Elektrowerkzeugmaschine nach den Oberbegriffen der unabhängigen Ansprüche.

Bürstenlose Gleichstrommotoren (BLDC-Motoren) mit Luftspaltwicklung sind üblicherweise mit einem Wickelkörper ausgestattet, auf den ein Statorpaket aufgebracht ist. Solche BLDC-Motoren kommen beispielsweise in Elektrowerkzeugmaschinen zum Einsatz. Bei freitragenden Wickelkörpern wird der Wickelkörper jeweils in das Statorpaket gefügt, welches aus einzelnen Blechringen gebildet ist. Zwischen dem Wickelkörper und dem Statorpaket ist eine Flächenisolation notwendig, um einen Kurzschluss zwischen den üblicherweise lackisolierten Wickeldrähten und dem Statorpaket zu vermeiden. Diese meist wenige hundert Mikrometer dicke Flächenisolation hat Rechteckform und ist mantelförmig um den Wickelkörper gelegt. Die Kanten der Flächenisolation klaffen auseinander, so dass in Längsrichtung des Wickelkörpers ein ungeschützter Bereich gegenüber dem Statorpaket auftreten kann. Dies kann es einerseits zu Problemen führen, wenn Anforderungen an Luft-und Kriechstrecken nicht erfüllt sind, andererseits erschwert dies das Fügen des Wickelkörpers in das Statorpaket, da der Wickelkörper möglichst passgenau im Statorpaket sitzen muss, um eine gute Wärmeableitung aus dem Wickelkörper heraus zu ermöglichen. Die Flächenisolation kann dabei leicht beschädigt werden.

### Offenbarung der Erfindung

Die Erfindung geht aus von Stator mit einer um einen Wickelkörper angeordneten Isolierung, wobei ein Statorpaket auf der Isolierung angeordnet ist.

In der US 2003/038555 A1 ist ein derartiger Stator offenbart, bei dem eine Isolierlage aus Silikongummi um den Wickelkörper gelegt wird, wobei anschließend das Statorpaket darauf angeordnet wird.

In der JP-A1-2002-136068 ist ein Stator offenbart, bei dem eine Klebefolie auf die Innenseite des Stators fixiert wird. Eine Spulenanordnung wird an der Innenseite der Klebefolie fixiert.

Es wird vorgeschlagen, dass die Isolierung als freitragende Hülse ausgebildet ist, wobei die freitragende Hülse eine Wandstärke von weniger als hundert Mikrometer bis zu mehreren hundert Mikrometern aufweist und mit den Abmessungen genau auf einen Wickelkörperaußendurchmesser und ein Spaltmaß zwischen Wickelkörper und Statorpaket angepasst ist.

Vorteilhaft ist, dass die Isolierung passgenau hergestellt werden kann und die Ausbildung von Stoßstellen, welche eine elektrische Isolation zwischen Statorpaket und Spulendrähten des Wickelkörpers gefährden kann oder welche das Fügen des Wickelkörpers in das Statorpaket behindert, vermieden werden kann. Luft- und Kriechstreckenerfordernisse können auch für netzspannungsbetriebene Elektromotoren bzw. Elektrowerkzeugmaschinen sichergestellt werden. Es kann ein hohes Maß an Isoliereigenschaften zwischen Wickelkörper und Statoreisen geschaffen werden, selbst wenn die Kupferlackdrähte des Wickelkörpers eine Anzahl von herstellungsbedingten Fehlstellen aufweisen, an denen die Lackisolation nicht die erforderliche Dicke aufweist oder gar nicht vorhanden ist. Die hülsenförmige Isolierung schützt den Wickelkörper beim Einbau in das Statorpaket vor Beschädigungen.

Vorteilhaft kann der Wickelkörper die Isolierung an einem ihrer axialen Enden axial und radial überragen und die Isolierung an diesem Ende eine einer Außenkontur des Wickelkörpers nachgeführte, nach außen umgelegte Erweiterung aufweisen. Die Erweiterung kann bei einem üblichen Imprägnieren der Isolierung und/oder des Stators mit einem mechanisch stabilisierenden Material, etwa mit einem Träufelharz, eine vorteilhafte Ansammlung des Materials erreicht werden, das sich an der Erweiterung sammeln kann. Dadurch können Kupferlackdrähte des Wickelkörpers, die im Bereich dieser Erweiterung durch Verformung besonders stark belastet sind, zusätzlich elektrisch isoliert werden, selbst wenn deren ursprüngliche Lackisolation durch die Verformung beschädigt wurde.

Im Bereich der Erweiterung kann außenumfänglich ein Fixierring angeordnet sein, der axial zwischen der Erweiterung und dem um den Wickelkörper angeordneten Statorpaket liegt.

Durch die Erweiterung ist eine elektrische Isolation zwischen dem Fixierring und dem Wickelkörper gewährleistet. Gleichzeitig kann ein definierter Abstand zwischen dem Statorpaket und dem Wickelkörper sichergestellt werden. Selbst wenn sich im Betrieb des Elektromotors, in dem der Stator eingesetzt ist, durch eine hohe Axialbeschleunigung - etwa im Schlagbetrieb eines Schlaghammers - eine oder mehrere Blechlamellen des Statorpakets lösen sollten, kann durch die Erweiterung und zusätzlich durch den Fixierring ein Mindestabstand zwischen Statorpaket und Wickelkörper eingehalten und ein elektrischer Kurzschluss oder eine mechanische Beschädigung vermieden werden.

Kann die Isolierung an einem axialen Ende einen radial nach innen weisenden Steg aufweisen, schützt die Isolierung den Wickelkörper beim Einbau in das Statorpaket effizient vor Beschädigungen.

Besonders einfach und reproduzierbar ist die Herstellung der Isolierung, wenn die Isolierung aus wenigstens einem Streifen gebildet ist, dessen Kanten schräg zu einer Längsachse der Hülse verlaufen. Günstigerweise kann sich kein in Längsrichtung gerichteter Luftspalt in der Isolierung ausbilden.

Eine erhöhte mechanische Festigkeit kann erreicht werden, wenn die Isolierung mit einem mechanisch stabilisierenden Material durchdrungen sein kann, etwa einem Träufelharz.

Gemäß einem weiteren Aspekt der Erfindung wird eine Isolierung für einen Stator in Form einer freitragenden Hülsenform vorgeschlagen, mit einer Wandstärke von weniger als hundert Mikrometer bis zu mehreren hundert Mikrometern, wobei die freitragende Hülsenform in ihren Abmessungen genau auf einen Wickelkörperaußendurchmesser und ein Spaltmaß zwischen Wickelkörper und Statorpaket angepasst ist. Es ist vorgesehen, in die Isolierung einen Wickelkörper zu fügen.

Bevorzugt kann die Hülsenform durch wenigstens einen schräg zu einer Längsachse der Hülsenform gewickelten Materialstreifen gebildet sein. So können mehrere Streifen diagonal so verklebt sein, dass eine Endloshülse entsteht. Durch die Hülsenform der Isolierung kann die Montage eines Elektromotors bei der Herstellung erleichtert werden. Es kann ein sehr einfaches, kostengünstiges Material verwendet werden, da durch die Beschaffenheit der Isolierung auch die Gefahr der Beschädigung der Isolierung vermindert ist.

Vorteilhaft kann der Materialstreifen aus Papier gebildet sein. Die Fertigungsart der Isolierung erlaubt eine weite Werkstoffauswahl. Es sind Elektroisolierpapiere geeignet bis hin zu backlackbeschichtetem Papier oder Höchstspannungskabelpapier nach DIN VDE 0311-35. Das letztere ist im Sinne von Flächenisolierstoffen im Elektromaschinenbau ein besonders einfaches und kostengünstiges Material. Der Fachmann wird eine geeignete Auswahl je nach Rahmenbedingungen wählen.

An einem axialen Ende der Isolierung kann eine nach außen umgelegte Erweiterung angeordnet sein und/oder an einem axialen Ende eine radial nach innen weisenden Steg vorgesehen sein. Sind ein Ende mit der radialen Erweiterung und das gegenüberliegende Ende mit dem nach innen weisenden Steg versehen, ist eine Isolierung geschaffen, die den Wickelkörper besonders effizient beim Einbau und im Betrieb vor Schäden schützen kann.

Die Isolierung kann eine geringe Wandstärke von weniger als 100 µm bis zu einigen 100 µm aufweisen und hinsichtlich ihrer Abmessungen genau auf den Wickelkörperaußendurchmesser und Spaltmaß zwischen Wickelkörper und Statorpaket angepasst werden.

Es wird ein Elektromotor mit einem Stator vorgeschlagen, zwischen dessen Wickelkörper und Statorpaket eine als freitragende Hülse ausgebildete Isolierung aufweist. Aufgrund der Beschaffenheit der Isolierung kann die Durchdringung der Isolierung mit einem mechanisch stabilisierenden Material, etwa einem Träufelharz, erleichtert werden. Einerseits kann vorteilhaft die Herstellung verbessert werden, da die Imprägnierzeit verkürzt werden kann. Andererseits ist eine innige Verbindung zwischen Wickelkörper und Statorpaket möglich.

Die mechanische Belastbarkeit des Elektromotors durch Schwingungen im Betrieb wird wesentlich erhöht und der Temperaturübergang vom Wickelkörper zum Statorpaket wird verbessert, d.h. der Wärmeübergang reduziert sich deutlich.

Bei normalen mechanischen Beanspruchungen und Einsatz von backlackbeschichtetem Papier kann auch gänzlich auf Träufelharz verzichtet werden.

Die Wicklung des Elektromotors ist als Wickelkörper ausgeführt, bestehend aus z.B. sechs Spulen mit zwei Spulen pro Phase bei drei Phasen. Die Wicklung besteht je nach gewünschter Drehzahl des Elektromotors und abhängig von der Versorgungsspannung aus wenigen Windungen. Um einen hohen Füllfaktor zu erreichen und die Bewicklung bzgl. minimal möglicher Radien gut ausführen zu können, erfolgt eine Parallelwicklung, d.h. es wird mit mehreren Drähten gleichzeitig gewickelt. Aus Gründen der automatischen Herstellbarkeit kann die Wicklung wickeltechnisch bevorzugt als fortgesetzte Reihenschaltung ausgeführt werden.

Durch die Parallelbewicklung sind in der Fertigung wenige verschiedene Drahtdurchmesser ausreichend, etwa entsprechend der Zahl der Varianten einer bestimmten Motorgröße. Die Wickeldrähte können als Backlackdrähte ausgeführt sein. Die Spulen des Wickelkörpers werden auf einen Spulenkörper gewickelt, der nach dem Wickeln entfernt wird. Zur Einsparung von Baulänge wird ein Wickelkopf geformt, der einen radial nach außen umgelegten Rand bildet, an der gegenüberliegenden Seite wird der Rand radial nach innen umgelegt, so dass sich ein im Zentrum offener Boden bildet. Anschließend wird die Wicklung, bzw. der Wickelkörper, zu einem festen Körper verbacken. Über den Wickelkörper wird eine Flächenisolation aufgebracht, vorzugsweise eine freitragende Hülse aus einem Flächenisolierstoff. Der isolierte Wickelkörper wird in das Statoreisen, das aus axial aufeinander gestapelten Blechringen besteht, eingeführt. Der Festsitz im Stator kann durch Ausführung der Flächenisolation als Backlackpapier oder durch eine zusätzliche Träufelung mit Imprägnierharz erreicht werden. Vorteile der Träufelung sind einerseits eine mechanische Sicherung der Wicklung gegen Verdrehung durch das im Betrieb auftretende Motordrehmoment und andererseits eine verbesserte Wärmeabfuhr der Wicklung, was zu Steigerung der Nennleistung, aber auch zu verbesserter Überlastfähigkeit und dadurch zu äußerster Robustheit des Motors führt.

Der Rotor besteht aus der Rotorwelle und einem auf der Rotorwelle befestigten Permanentmagneten, der als Vollmagnet, aber auch aus axial aneinandergereihten Ringen bestehend ausgebildet sein kann und meist aus einem Selten-Erd-Magnetmaterial gebildet ist, z.B. Nd-Fe-B-Legierungen. Die Rotorwelle ist kugelgelagert, jedoch sind auch Gleitlager denkbar.

Der BLDC-Motor mit Luftspaltwicklung weist gegenüber einem BLDC-Motor mit genutetem Stator und einem DC-Motor eine Reihe von Vorteilen auf. Es können hohe Drehzahlen erreicht werden von bis zu 50 000 U/min und mehr, bis zur Belastungsgrenze eines mit dem Motor gekoppelten Getriebes. Bei hohen Drehzahlen treten nur geringe Eisenverluste auf. Durch seine Bauart erreicht der Motor eine kleine Induktivität, höhere Induktivitäten führen zu kleineren Effektivströmen bei steigenden Drehzahlen, und zunehmende Induktivität bereitet verstärkt Schaltverluste in der Elektronik. Durch geringe Eisen- und Kupferverluste erreicht der BLDC-Motor mit Luftspaltwicklung einen hohen Maximalwirkungsgrad. Durch die niederohmige Wicklung wird über ein nahezu den gesamten Arbeitsbereich optimaler Wirkungsgrad erreicht. Die Art der Bewicklung lässt einen hohen "Nutfüllfaktor" zu, führt dadurch zu einer hohen Leistungsdichte und lässt eine verhältnismäßig feine Anpassung an die gewünschte Drehzahl zu. Durch die Herstellart der Wicklung ist der Motor besonders geeignet für einen großen Bereich von Statordurchmessern, von ca. 20 mm bis über 40 cm. Ferner ist nur ein relativ geringer Investitionsaufwand für eine teilautomatisierte Herstellung in größeren Stückzahlen erforderlich. Vorteilhaft ist weiterhin, dass durch die Weiterentwicklung in der Akkutechnologie und damit kleinere Innenwiderstände der Akkus Vorteile des BLDC-Motors mit Luftspaltwicklung überproportional größer gegenüber dem BLDC-Motor mit genutetem Stator werden.

Vorteilhaft ist eine Elektrowerkzeugmaschine, insbesondere eine Elektrowerkzeugmaschine mit einem schlagend und/oder drehend antreibbaren Einsatzwerkzeug, mit einem Elektromotor, der einen Stator mit wenigstens einem der vorstehend beschriebenen Merkmale umfasst.

### Kurze Beschreibung der Zeichnungen

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen:
- Fig. 1: einen Längsschnitt durch einen bevorzugten Elektromotor;
- Fig. 2a: eine Schrägansicht einer bevorzugten Isolierung in Form einer freitragenden Hülse;
- Fig. 2b: einen Längsschnitt durch die bevorzugte Isolierung;
- Fig. 2c: eine Detail der Isolierung im Bereich IIC der Fig. 2b;
- Fig. 3: eine Schrägansicht eines bevorzugten Statorteils mit auf einen Wickelkörper aufgeschobener Isolierung; und
- Fig. 4: eine bevorzugte Elektrowerkzeugmaschine.

### Ausführungsform der Erfindung

In den Figuren sind gleiche oder gleich wirkende Elemente mit denselben Bezugszeichen beziffert.

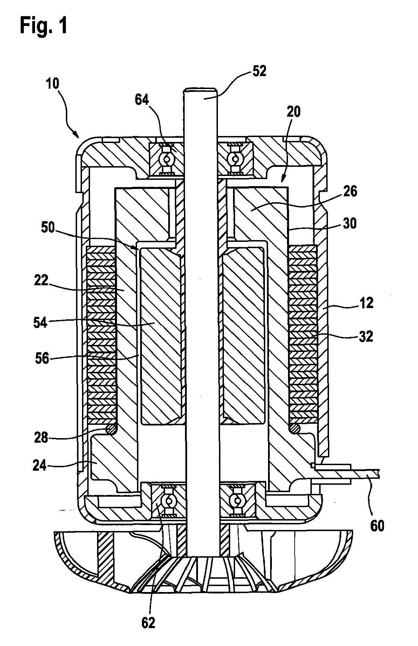

Fig. 1 zeigt einen Längsschnitt durch einen bevorzugten Elektromotor 10 mit einem in einem Gehäuse 12 angeordneten Stator 20 und einem als Innenläufer angeordneten Rotor 50. Der Rotor 50 weist eine Rotorwelle 52 auf, auf der ein Permanentmagnet 54 angeordnet ist. Die Rotorwelle 52 ist in einem oberen und einem unteren Lager 62, 64, vorzugsweise einem Wälzlager gelagert. Denkbar wäre auch ein Gleitlager. Zwischen einem Außenumfang des Rotors 50 und einer Innenkontur eines Wickelkörpers 22 des Stators 20 des Elektromotors 10 ist ein Luftspalt 56 ausgebildet.

Außenumfänglich ist am Wickelkörper 22 eine Isolierung 30 aufgebracht, auf welcher ein Statorpaket 32 angeordnet ist. Das Statorpaket 32 besteht in üblicher Weise aus in axialer Richtung aufeinander folgenden Blechringen. Der Wickelkörper 22 besteht üblicherweise aus einer Wicklung aus einer Vielzahl von Kupferlackdrähten, die in geeigneter Weise geformt ist.

Der Wickelkörper 22 weist an seinem in der Figur unteren Ende eine axiale Erweiterung in Form eines Wickelkopfs 24 auf, welcher in etwa einen Außendurchmesser aufweist, der dem Außendurchmesser des Statorpakets 32 entspricht. Der Wickelkörper 22 überragt mit seinem Wickelkopf 24 die Isolierung 30 axial und radial. Am entgegen gesetzten Ende 26 ist der Wickelkörper 22 radial nach innen ausgeformt, so dass sich insgesamt in etwa eine Topfform mit einem nach außen umgelegten Rand, entsprechend dem Wickelkopf 24, ergibt, wobei die Topfform von der Rotorwelle 52 mit dem Permanentmagneten 54 durchsetzt wird. Über einen elektrischen Anschluss 60 am Wickelkopf 24 kann der Wickelkörper 22, bzw. können die nicht näher dargestellten Spulen des Wickelkörpers bestromt werden.

Zwischen dem Statorpaket 32 und dem Wickelkopf 24 des Wickelkörpers 22 ist ein Fixierring 28 so angeordnet, dass dieser sich in den Radius zwischen dem Hauptkörper und dem Wickelkopf 24 schmiegt. Dabei kommt der Fixierring 28 noch auf der Isolierung 30 zu liegen.

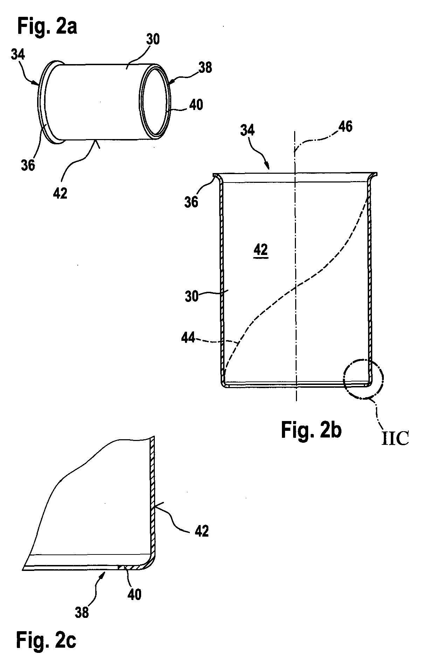

Die bevorzugte Isolierung 30 ist in den Fig. 2a-2c detailliert dargestellt, die hier in Zusammenschau beschrieben werden. Die Isolierung 30 ist in Form einer freitragenden Hülse mit einer zylindrischen Mantelfläche 42 zwischen einem ersten Ende 34 und einem zweiten Ende 38 ausgebildet.

Die Isolierung 30 weist am ersten Ende 34 eine nach außen umgelegte Erweiterung 36 auf, die der Außenkontur des Wickelkörpers 22 nachgeführt ist (Wickelkopf 24, Fig. 1). Am zweiten Ende 38 weist die Isolierung 30 einen angeprägten, offenen Boden mit einem radial nach innen weisenden Steg 40 auf.

Der Steg 40 erleichtert die Montage des Statorpakets 22 (Fig. 1) erheblich, welches nunmehr einfacher über die an der Mantelfläche 42 geschlossene Isolierung 30 geschoben werden kann. Die Erweiterung 36 erleichtert das Fügen des Wickelkörpers 22 in die Isolierung und schützt die Wicklung an einer sehr durch Verformung der Kupferlackdrähte strapazierten Stelle am Wickelkopf 24 des Wickelkörpers 22.

Vorzugsweise ist die als Hülse ausgebildete Isolierung 30 aus einem aus zwei oder mehr Schichten bestehenden Papier gebildet, wobei die Schichten diagonal so verklebt sind, dass eine Endloshülse entsteht. In Fig. 2b ist eine diagonal verlaufende Naht 44 in der Mantelfläche 42 der Isolierung 30 angedeutet.

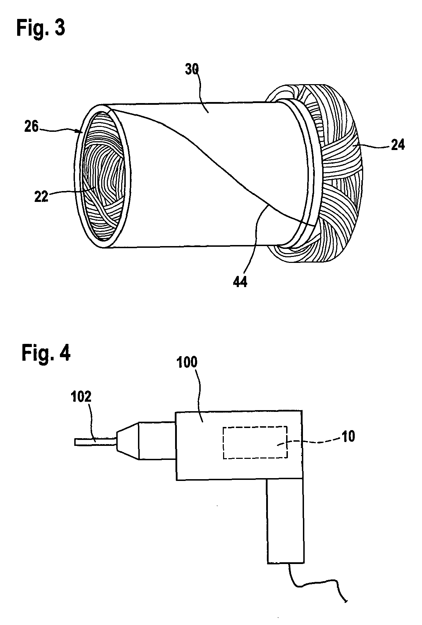

Diese Fertigungsart der Isolierung 30 erlaubt eine breite Werkstoffauswahl. Jede Art von Elektroisolierpapier bis hin zu backlackbeschichtetem Papier ist geeignet. Die als Hülse ausgebildete Isolierung 30 kann dann, zweckmäßigerweise mit eingefügtem Wickelkörper 22, zur mechanischen Stabilisierung mit einem Harz, z.B. Träufelharz, durchtränkt werden. Die Verbindung zwischen Isolierung 30 und Wickelkörper 22 ist dann besonders intensiv. An der Erweiterung 36 der Isolierung 30 kann sich mehr Harz ansammeln und die strapazierte Stelle am Wickelkopf zusätzlich schützen. Dies ist leicht der Fig. 3 zu entnehmen, welche einen Wickelkörper 22 mit aufgesetzter, als Hülse ausgebildete Isolierung 30 zeigt. Der Wickelkopf 24 steht radial und axial über die Isolierung 30 über, während der nach innen weisende angeprägte Steg 40 den Boden 26 des Wickelkörpers 22 randseitig untergreift und schützt.

Die als Hülse ausgebildete Isolierung 30 kann eine bis zu mehreren hundert Mikrometern Wandstärke aufweisen und mit den Abmessungen genau auf den Wickelkörperaußendurchmesser und ein Spaltmaß zwischen Wickelkörper 22 und Statorpaket 32 angepasst werden.

Fig. 4 zeigt schließlich eine bevorzugte Elektrowerkzeugmaschine 100 für Netz- oder Akkubetrieb in Form einer Elektrowerkzeugmaschine 100 mit schlagend und/oder drehend antreibbarem Einsatzwerkzeug 102. Die Elektrowerkzeugmaschine weist einen Elektromotor 10 auf, der mit einem Stator 20 ausgestattet ist, wie er vorstehend in den Fig.1 bis 3 beschrieben wurde. Die Elektrowerkzeugmaschine 100 kann insbesondere eine hoch beanspruchbare Elektrowerkzeugmaschine, etwa ein Industrieschrauber, ein Akkuschrauber, oder ein Bohrhammer sein.

## Patentansprüche

1. Stator mit einer um einen Wickelkörper (22) angeordneten Isolierung (30), wobei ein Statorpaket (32) auf der Isolierung (30) angeordnet ist, **dadurch gekennzeichnet, dass** die Isolierung (30) als freitragende Hülse ausgebildet ist, wobei die freitragende Hülse eine Wandstärke von weniger als hundert Mikrometer bis zu mehreren hundert Mikrometern aufweist und mit den Abmessungen genau auf einen Wickelkörperaußendurchmesser und ein Spaltmaß zwischen Wickelkörper (22) und Statorpaket (32) angepasst ist.

2. Stator nach Anspruch 1, **dadurch gekennzeichnet, dass** der Wickelkörper (22) die Isolierung (30) an einem ihrer axialen Enden (34) axial und radial überragt und die Isolierung (30) an diesem Ende (34) eine einer Außenkontur des Wickelkörpers (22) nachgeführte nach außen umgelegte Erweiterung (36) aufweist.

3. Stator nach Anspruch 2, **dadurch gekennzeichnet, dass** im Bereich der Erweiterung (36) außenumfänglich ein Fixierring (28) angeordnet ist, der axial zwischen der Erweiterung (36) und dem um den Wickelkörper (22) angeordneten Statorpaket (32) liegt.

4. Stator nach einem der vorhergehenden Ansprüche, **dadurch gekennzeichnet, dass** die Isolierung (30) an einem axialen Ende (38) einen radial nach innen weisenden Steg (40) aufweist.

5. Stator nach einem der vorhergehenden Ansprüche, **dadurch gekennzeichnet, dass** die Isolierung (30) aus wenigstens einem Streifen gebildet ist, dessen Kanten schräg zu einer Längsachse (46) der Hülse verlaufen.

6. Stator nach einem der vorhergehenden Ansprüche, **dadurch gekennzeichnet, dass** die Isolierung (30) mit einem mechanisch stabilisierenden Material durchdrungen ist.

7. Isolierung für einen Stator (20) nach wenigstens einem der vorhergehenden Ansprüche mit einem Wickelkörper (22) und einem Statorpaket (32), wobei die Isolierung um den Wickelkörper (22) angeordnet ist und das Statorpaket (32) auf der Isolierung angeordnet ist, **gekennzeichnet durch** eine freitragende Hülsenform mit einer Wandstärke von weniger als hundert Mikrometer bis zu mehreren hundert Mikrometern, wobei die freitragende Hülsenform in ihren Abmessungen genau auf einen Wickelkörperaußendurchmesser und ein Spaltmaß zwischen Wickelkörper (22) und Statorpaket (32) angepasst ist.

8. Isolierung nach Anspruch 7, **dadurch gekennzeichnet, dass** die Hülsenform durch wenigstens einen schräg zu einer Längsachse (46) der Hülsenform gewickelten Materialstreifen gebildet ist.

9. Isolierung nach Anspruch 7 oder 8, **dadurch gekennzeichnet, dass** der Materialstreifen aus Papier gebildet ist.

10. Isolierung nach einem der Ansprüche 7 bis 9, **dadurch gekennzeichnet, dass** an einem ihrer axialen Enden (34) eine nach außen umgelegte Erweiterung (36) aufweist und/oder an einem axialen Ende (38) eine radial nach innen weisenden Steg (40) vorgesehen ist.

11. Elektromotor mit einem Stator (20) nach wenigstens einem der Ansprüche 1 bis 6.

12. Elektrowerkzeugmaschine, insbesondere Elektrowerkzeugmaschine mit einem schlagend und/oder drehend antreibbaren Einsatzwerkzeug (102), mit einem Elektromotor (10), der einem Stator (20) nach wenigstens einem der Ansprüche 1 bis 6 aufweist.

## Claims

1. Stator having an insulation means (30) which is arranged around a winding former (22), wherein a stator core (32) is arranged on the insulation means (30), **characterized in that** the insulation means (30) is in the form of a self-supporting sleeve, wherein the self-supporting sleeve has a wall thickness of less than one hundred micrometres to several hundred micrometres and, in respect of dimensions, is matched exactly to a winding former outside diameter and to a clearance between the winding former (22) and the stator core (32).

2. Stator according to Claim 1, **characterized in that** the winding former (22) projects axially and radially beyond the insulation means (30) at one of the axial ends (34) of the said insulation means, and the insulation means (30) has a widened portion (36), which is turned over towards the outside and follows an outer contour of the winding former (22), at this end (34).

3. Stator according to Claim 2, **characterized in that** a fixing ring (28) is arranged in the region of the widened portion (36) over the outer circumference and is situated axially between the widened portion (36) and the stator core (32) which is arranged around the winding former (22).

4. Stator according to one of the preceding claims, **characterized in that** the insulation means (30) has a web (40), which faces radially inwards, at one axial end (38).

5. Stator according to one of the preceding claims, **characterized in that** the insulation means (30) is formed from at least one strip, the edges of the said strip running obliquely to a longitudinal axis (46) of the sleeve.

6. Stator according to one of the preceding claims, **characterized in that** a mechanically stabilizing material passes through the insulation means (30).

7. Insulation means for a stator (20) according to at least one of the preceding claims having a winding former (22) and a stator core (32), wherein the insulation means is arranged around the winding former (22) and the stator core (32) is arranged on the insulation means, **characterized by** a self-supporting sleeve shape with a wall thickness of less than one hundred micrometres to several hundred micrometres, wherein the self-supporting sleeve shape, in respect of its dimensions, is matched exactly to a winding former outside diameter and a clearance between the winding former (22) and the stator core (32).

8. Insulation means according to Claim 7, **characterized in that** the sleeve shape is formed by at least one material strip which is wound obliquely to a longitudinal axis (46) of the sleeve shape.

9. Insulation means according to Claim 7 or 8, **characterized in that** the material strip is formed from paper.

10. Insulation means according to one of Claims 7 to 9, **characterized in that** a widened portion (36) which is turned over towards the outside is arranged at one of the axial ends (34) of the said insulation means and/or a web (40) which faces radially inwards is provided at one axial end (38).

11. Electric motor having a stator (20) according to at least one of Claims 1 to 6.

12. Electric power tool, in particular an electric power tool having an application tool (102) which can be driven in a percussive and/or rotary manner, having an electric motor (10) which has a stator (20) according to at least one of Claims 1 to 6.

## Revendications

1. Stator doté d'une isolation (30) disposée autour d'un corps d'enroulement (22), un paquet de stator (32) étant disposé sur l'isolation (30), **caractérisé en ce que** l'isolation (30) prend la forme d'une gaine indépendante, la gaine indépendante présentant une épaisseur de paroi allant de moins de cent micromètres à plusieurs centaines de micromètres et avec des cotes précisément adaptées à un diamètre extérieur de corps d'enroulement et à une dimension d'interstice entre le corps d'enroulement (22) et le paquet de stator (32).

2. Stator selon la revendication 1, **caractérisé en ce que** le corps d'enroulement (22) ressort de l'isolation (30) dans le plan axial et dans le plan radial au niveau d'une de ses extrémités axiales (34) et que l'isolation (30) comporte au niveau de cette extrémité (34) un élargissement (36) rabattu vers l'extérieur conçu d'après un contour extérieur du corps d'enroulement (22).

3. Stator selon la revendication 2, **caractérisé en ce qu'**une bague de fixation (28) est disposée au niveau de la circonférence extérieure dans la zone de l'élargissement (36), ladite bague reposant dans le plan axial entre l'élargissement (36) et le paquet de stator (32) disposé autour du corps d'enroulement (22).

4. Stator selon l'une quelconque des revendications précédentes, **caractérisé en ce que** l'isolation (30) comporte un étai (40) orienté vers l'intérieur dans le plan radial au niveau d'une extrémité axiale (38).

5. Stator selon l'une quelconque des revendications précédentes, **caractérisé en ce que** l'isolation (30) se compose d'au moins une bande dont les arêtes s'étendent en oblique par rapport à un axe longitudinal (46) de la gaine.

6. Stator selon l'une quelconque des revendications précédentes, **caractérisé en ce que** l'isolation (30) est imprégnée d'une matière stabilisante sur le plan mécanique.

7. Isolation pour un stator (20) selon au moins l'une quelconque des revendications précédentes, avec un corps d'enroulement (22) et un paquet de stator (32), l'isolation étant disposée autour du corps d'enroulement (22) et le paquet de stator (32) étant disposé sur l'isolation, **caractérisée en ce que** l'isolation prend la forme d'une gaine indépendante, la gaine indépendante présentant une épaisseur de paroi allant de moins de cent micromètres à plusieurs centaines de micromètres et avec des cotes précisément adaptées à un diamètre extérieur de corps d'enroulement et à une dimension d'interstice entre le corps d'enroulement (22) et le paquet de stator (32).

8. Isolation selon la revendication 7, **caractérisée en ce que** la forme de gaine est formée par au moins une bande de matière enroulée en oblique par rapport à un axe longitudinal (46) de la forme de gaine.

9. Isolation selon la revendication 7 ou 8, **caractérisée en ce que** la bande de matière est en papier.

10. Isolation selon l'une quelconque des revendications 7 à 9, **caractérisée en ce qu'**un élargissement (36) rabattu vers l'extérieur est disposé au niveau d'une des extrémités axiales (34) de l'isolation et/ou qu'un étai (40) orienté vers l'intérieur dans le plan radial est prévu au niveau d'une extrémité axiale (38).

11. Moteur électrique doté d'un stator (20) selon au moins l'une quelconque des revendications 1 à 6.

12. Machine-outil électrique, notamment machine-outil électrique équipée d'un outil encastrable (102) pouvant être entraîné par percussion et/ou rotation, avec un moteur électrique (10) comportant un stator (20) selon au moins l'une quelconque des revendications 1 à 6.
